# EUROPEAN PATENT APPLICATION

(11) **EP 4 775 293 A2**
(43) Date of publication of application: **15.07.2026**
(21) Application number: 25215918.1
(22) Date of filing: 14.11.2025
(51) Int. Cl.: B01D 53/04, B01D 53/96

(54) **ATMOSPHERIC CARBON DIOXIDE CAPTURE SYSTEM**

(30) Priority: 26.11.2024 US 202418960217
(71) Applicant: Robert Bosch GmbH, 70442 Stuttgart (DE)
(72) Inventor: Schmidt, Helmut, 74321 Bietigheim-Bissingen (DE); Gorlin, Yelena, Menlo Park,California, 94025 (US); Baldizzone, Claudio, 70174 Stuttgart (DE)

(57) **Abstract**

An atmospheric CO₂ capture system includes a compartment housing a solid CO₂ sorbent, an exchange fluid including a chemical component with selectivity towards CO₂, and an electrochemical cell or mineralization reactor in fluid communication with the compartment, the system having a cycle including a first state of sorbing CO₂ from incoming air onto the solid CO₂ sorbent until a saturation point is reached; a second state of regenerating the sorbent by flooding the compartment with the exchange fluid to detach CO₂ from the saturated sorbent and bind the detached CO₂ to the chemical component; and a third state of regenerating the chemical component and utilizing the CO₂ in the electrochemical cell or mineralization reactor.

## Description

### TECHNICAL FIELD

The present disclosure relates to a system for capture of atmospheric carbon dioxide (CO₂) using a sorbent, regeneration of the sorbent, and a method of using the system.

### BACKGROUND

Carbon dioxide is a notorious greenhouse gas whose emissions have been sharply on the rise since the Industrial Revolution began in the 18^{th} century. Since then, the CO₂ emissions have been a confirmed culprit in the climate change around the world. Recent findings of the International Panel on Climate Change have proposed that the CO₂ emissions should be halved by 2030 to avoid further negative impact on the planet. Various technologies have been developed to capture atmospheric CO₂, but their drawbacks prevent realization of more widespread CO₂ sequestration from air.

### SUMMARY

In at least one embodiment, an atmospheric CO₂ capture system is disclosed. The system includes a compartment housing a solid CO₂ sorbent, an exchange fluid including a chemical component with selectivity towards CO₂, and an electrochemical cell in fluid communication with the compartment. The system has a cycle including a first state of sorbing CO₂ from incoming air onto the solid CO₂ sorbent until a saturation point is reached, a second state of regenerating the sorbent by flooding the compartment with the exchange fluid to detach CO₂ from the saturated sorbent and bind the detached CO₂ to the chemical component, and a third state of regenerating the chemical component by detaching CO₂ from the chemical component in the electrochemical cell and releasing the CO₂ from the system. The chemical component may include an amine dissolved in an aqueous solution. The first and second states may be repeated before the system proceeds to the third state. A temperature of the solid sorbent may be maintained at a constant value throughout the first, second, and third states. The third state may further include providing the regenerated chemical component to the compartment during a second state of a following cycle. The solid CO₂ sorbent may be an amine-based sorbent. The CO₂ bound to the chemical component formed in the second state may be provided into the compartment in the first state of a following cycle. The second and third state may be repeated before the system proceeds to the first state in the following cycle.

In another embodiment, an atmospheric CO₂ capture system is disclosed. The system may include a compartment housing a solid amine-functionalized CO₂ sorbent, a first exchange solution including a first chemical component with a selectivity towards amines, a second exchange solution including a second chemical component with a selectivity towards the first chemical component, and an electrochemical cell connected to the compartment. The system may have a first state of sorbing CO₂ from incoming air onto the solid sorbent until a saturation point is reached, a second state of regenerating the solid amine-functionalized CO₂ sorbent by flooding the compartment with the first exchange fluid to detach CO₂ from the saturated sorbent and bind the first chemical component to the solid sorbent, removing the first exchange solution from the compartment, and flooding the compartment with the second exchange solution to detach the first chemical component from the solid sorbent to bind it to the second chemical component, and a third state of regenerating the first and/or second chemical components by detaching them from each other in the electrochemical cell. The CO₂ may be released from the compartment in the second state. The first chemical component may include one or more metal ions. The second chemical component may include an amine. The system may be free of a heating element. The solid amine-functionalized CO₂ sorbent may maintain a constant temperature throughout the states.

In yet another embodiment, a direct air capture (DAC) system is disclosed. The system may include at least one compartment housing a solid amine-functionalized CO₂ sorbent, at least one exchange fluid including a first chemical component with a preferential affinity towards CO₂, amines, or a second chemical component, an electrochemical cell fluidly connected to the compartment, and one or more conduits structured to provide the chemical component in a pristine form from the electrochemical cell to the compartment. The system may include a plurality of the compartments, each fluidly connected to the electrochemical cell. The at least one exchange fluid may include a first exchange fluid and a second exchange fluid. The first exchange fluid may include a chemical component with selectivity to CO₂ and the second exchange fluid includes a chemical component with selectivity to the first chemical component. The solid sorbent may maintain a constant temperature. The system may include a first chemical component different from the second chemical component.

In another embodiment, a direct air capture method is disclosed. The method may include receiving direct air captured CO₂ in a first inlet to an electrochemical cell from an outlet of a solid sorbent compartment, receiving water into a second inlet to the electrochemical cell, forming a target product in the electrochemical cell by reducing carbamate ions from the direct air captured CO₂ in the presence of the water via a chemical reduction reaction, and outputting the target product from the electrochemical cell. The target product may have at least one state of matter.

In yet another embodiment, a direct air capture method is disclosed. The method may include sorbing atmospheric CO₂ onto a solid sorbent contained in a compartment to form bound CO₂, regenerating the solid sorbent by flooding the compartment with an exchange fluid to detach the bound CO₂ from the solid sorbent and to form an exchange fluid-CO₂ solution, utilizing the CO₂ from the exchange fluid-CO₂ solution in an electrochemical cell by forming a product having the carbon atom from the CO₂ via a chemical reduction reaction, and regenerating the exchange fluid from the exchange fluid-CO₂ solution in the electrochemical cell via a chemical reduction reaction. At least a portion of the steps of utilizing the CO₂ and regenerating the exchange fluid may be performed simultaneously.

In another embodiment, a direct air capture system is disclosed. The system may include a compartment housing a solid amine-functionalized CO₂ sorbent to sorb atmospheric CO₂, an exchange fluid including a chemical component with a preferential affinity towards CO₂ to regenerate the solid amine-functionalized CO₂ sorbent and to bind the atmospheric CO₂, an electrochemical cell fluidly connected to the compartment and operable to catalyze a chemical reaction wherein CO₂ is reduced to form a product, a water feed fluidly connected to the electrochemical cell to supply water for the chemical reaction, and a conduit fluidly connected to the electrochemical cell and the compartment. The conduit may be structured to separate the chemical component from the product and to provide the chemical component from the electrochemical cell to the compartment.

In yet another embodiment, a direct air capture method is disclosed. The method may include receiving direct air captured CO₂ in an inlet to a chemical reactor from a solid sorbent, precipitating a target product from the direct air captured CO₂ in the chemical reactor, and outputting the target product from the chemical reactor.

In another embodiment, a direct air capture method is disclosed. The method may include sorbing atmospheric CO₂ onto a solid sorbent contained in a compartment to form bound CO₂, regenerating the solid sorbent by flooding the compartment with an exchange fluid to detach the bound CO₂ from the solid sorbent and to form an exchange fluid-CO₂ solution, utilizing the CO₂ from the exchange fluid-CO₂ solution in a chemical reactor by forming a product having the carbon atom from the CO₂ via a chemical precipitation reaction, and regenerating the exchange fluid from the exchange fluid-CO₂ solution in the chemical reactor. At least a portion of the steps of utilizing the CO₂ and regenerating the exchange fluid may be performed simultaneously.

In yet another embodiment, a direct air capture system is disclosed. The system may include a compartment housing a solid amine-functionalized CO₂ sorbent to sorb atmospheric CO₂, an exchange fluid including a chemical component with a preferential affinity towards CO₂ to regenerate the solid amine-functionalized CO₂ sorbent and bind the atmospheric CO₂, a chemical reactor fluidly connected to the compartment and operable to catalyze a chemical reaction wherein the atmospheric CO₂ is mineralized into a carbonate mineral, a conduit fluidly connected to the chemical reactor and the compartment. The conduit may be structured to separate the chemical component from the carbonate mineral and to provide the chemical component from the chemical reactor to the compartment.

### BRIEF DESCRIPTION OF THE DRAWINGS

Figure 1 is a schematic depiction of a prior art direct-air-capture (DAC) process in which a CO₂ sorbent regeneration requires a change in temperature, pressure, humidity level, or other stimulus;
Figure 2 shows a schematic of a prior art electrochemically mediated amine regeneration (EMAR) process in which a liquid sorbent is used to capture CO₂ from concentrated sources;
Figure 3 is a schematic of a non-limiting example system according to one or more embodiments disclosed herein providing multiple compartments with solid CO₂ sorbent connected to a common electrochemical cell;
Figures 4A and 4B show schematics of non-limiting example systems according to one or more embodiments disclosed herein utilizing a single exchange liquid for CO₂ solid sorbent regeneration;
Figure 5 shows a schematic of another non-limiting example system according to one or more embodiments disclosed herein utilizing multiple exchange liquids for CO₂ solid sorbent regeneration;
Figure 6 shows a schematic of a non-limiting example system according to one or more embodiments disclosed herein utilizing an electrochemical cell for exchange fluid regeneration and carbon utilization;
Figure 7 shows a schematic of another non-limiting example system according to one or more embodiments disclosed herein utilizing an electrochemical cell for exchange fluid regeneration and carbon utilization;
Figure 8 shows a schematic of yet another non-limiting example system according to one or more embodiments disclosed herein utilizing an electrochemical cell for exchange fluid regeneration and carbon utilization; and
Figure 9 shows a schematic of a non-limiting example system according to one or more embodiments disclosed herein utilizing a mineralization reactor for exchange fluid regeneration and carbon utilization.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, *i.e.* the range from 95 to 105. Generally, when the term "about" is used, it can be expected that similar results or effects according to the disclosure can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4. ... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (*e.g.,* pressure, pH, flow rates, *etc.*) can be practiced with plus or minus 50 percent of the values indicated rounded to or truncated to two significant figures of the value provided in the examples. In a refinement, concentrations, temperature, and reaction conditions (*e.g*., pressure, pH, flow rates, *etc.*) can be practiced with plus or minus 30 percent of the values indicated rounded to or truncated to two significant figures of the value provided in the examples. In another refinement, concentrations, temperature, and reaction conditions (*e.g.*, pressure, pH, flow rates, *etc*.) can be practiced with plus or minus 10 percent of the values indicated rounded to or truncated to two significant figures of the value provided in the examples.

For all compounds expressed as an empirical chemical formula with a plurality of letters and numeric subscripts (*e.g.*, CH₂O), values of the subscripts can be plus or minus 50 percent of the values indicated rounded to or truncated to two significant figures. For example, if CH₂O is indicated, a compound of formula C_{(0.8-1.2)}H_{(1.6-2.4)}O_{(0.8-1.2)}. In a refinement, values of the subscripts can be plus or minus 30 percent of the values indicated rounded to or truncated to two significant figures. In still another refinement, values of the subscripts can be plus or minus 20 percent of the values indicated rounded to or truncated to two significant figures.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps.

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description, and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Carbon dioxide or CO₂ is a primary greenhouse gas accounting for about 80% of all U.S. annual greenhouse gas emissions from human activities. The CO₂ emissions are a well-recognized global problem. Greenhouse gasses are gasses that trap heat in the atmosphere. The heat trapping causes changes in the radiative balance of the Earth that alter climate and weather patterns at global and regional scales. CO₂ is a chemical compound made up of molecules that each have one carbon atom covalently double bonded to two oxygen atoms. CO₂ is found in the gas state at ambient temperature. In the air, CO₂ is transparent to visible light but absorbs infrared radiation, thereby acting as a greenhouse gas. CO₂ enters the atmosphere through burning of fossil fuels such as coal, natural gas, and oil, solid waste, trees and other biological materials. CO₂ further enters the atmosphere as a result of certain chemical reactions such as manufacturing of cement or aluminum. Additionally, when methane enters the atmosphere, it combines with oxygen to form CO₂.

Because of its negative impact on the global climate, efforts have been made to reduce CO₂ emissions, mostly by capture of CO₂ at the source of release such as from smokestacks of power plants, cement plants, or aluminum plants. Yet, much of the man-made CO₂ emissions cannot be captured at the source such as those originating from cars or airplanes. Additionally, capture of the already released CO₂, so called legacy CO₂, is highly desirable to reduce the overall climate impact of the CO₂ greenhouse gas.

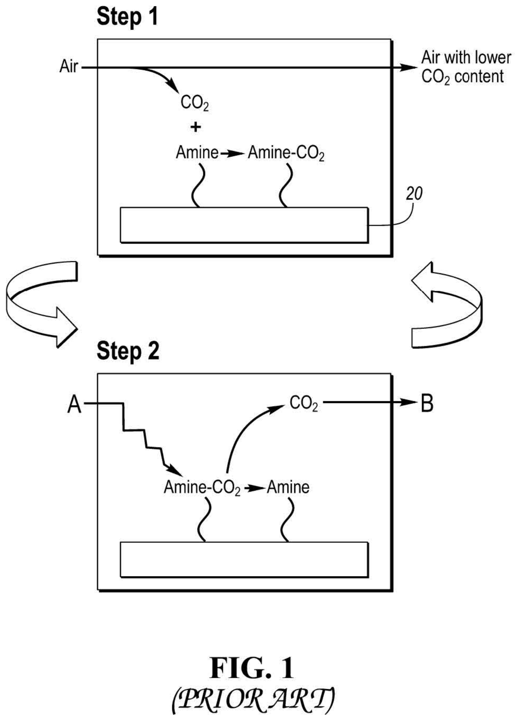

Hence, the extraction of CO₂ from ambient air is a potential route for the mitigation of greenhouse gas emissions and associated climate change. The direct extraction of CO₂ from air via a sorbent, typically termed direct air capture (DAC), is the gold-standard technology for this objective. A typical DAC sorption process includes two steps, shown schematically in Fig. 1.

As can be seen in Fig. 1, in the first stage or step 1, a sorbent 20 chosen to selectively absorb CO₂ is exposed to air until it reaches a desired saturation point. In the first step of Fig. 1, air is passed over an amine-functionalized sorbent 20, which separates CO₂ from the incoming gas stream, denoted as air. In the second stage or step 2, the sorbent is regenerated by stripping the absorbed CO₂ from the sorbent 20 and storing the captured CO₂ at high pressure and purity for later utilization or sequestration, marked as B. In the second step, the CO₂ bound to the solid sorbent 20 is detached using a change in temperature, pressure, humidity level, or other stimulus, marked as A, regenerating the sorbent to its pristine state and releasing the CO₂ for storage or utilization. The process can then be repeated. In the schematic, the line connecting "Amine" to "porous support" denotes that the amines are chemically bonded to the support.

While the first stage of this process is spontaneous, as the sorbent chemistry is chosen to react favorably with CO₂, the regeneration stage requires energy input to desorb the captured CO₂. The energy may come in the form of heat, changes in external pressure, changes in humidity, or potential. The energy cost of the DAC process, as well as the useful life of the sorbent material, are largely determined by the efficiency of the regeneration stage, making it an important design component of any DAC process. In general, a high energy demand for the desorption of the sorbent is an obstacle to successful use of the process. Additionally, the heat typically used for the desorption is such that damage to the sorbent frequently occurs due to thermal and oxidative stress. Further still, the desorption efficiency is limited such that less than 100% of the sorbent is typically recovered, with the recovery efficiency dropping over time.

A typical sorbent technology in DAC includes a porous support material functionalized with amine-containing molecules or polymers. For example, a porous silica or cellulose support material may be functionalized with amine-containing molecules or polyethyleneimine (PEI). In this type of sorbent, the amines react spontaneously with CO₂ to separate the CO₂ from the air while the porous support material provides a high surface area for the amine/air interface, ensures thar the air can flow through the sorbent, and anchors the amines in the solid sorbent, preventing their volatilization.

State-of-the-art solid sorbent systems based on supported amines are typically regenerated by heating to a temperature where the CO₂ no longer favorably binds to the amines, about or above 100°C, exposure to high-temperature steam, exposure to vacuum, or a combination of the above. These regeneration processes are very energy intensive, and in the case of high-temperature desorption, contribute to the degradation of the amine sorbent by thermal degradation and oxidation. Hence, such systems are not sustainable.

A relatively recent technology emerged in the area of CO₂ sequestration from concentrated sources such as power plant exhausts. In such sequestration scenarios, it is not the atmospheric capture, but rather a CO₂ capture directly at the source. Such capture is from concentrated CO₂ streams, not dilute sources such as air. The systems thus differ in components and set up.

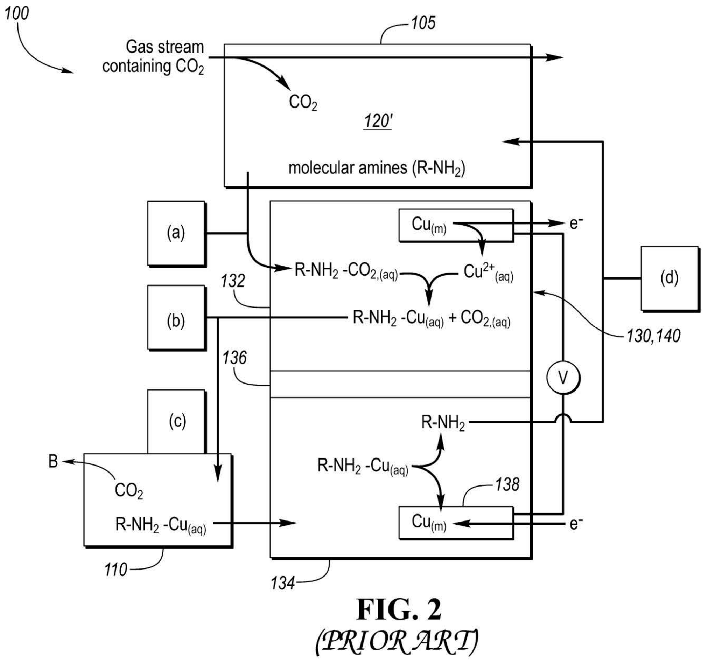

For example, the systems for CO₂ stream capture may use liquid sorbents. The CO₂-containing gas is bubbled through a liquid containing amine-containing molecules that react favorably with CO₂. The liquid sorbent solution may be regenerated analogously to the solid sorbent by heating. However, a more efficient approach is to remove the absorbed CO₂ electrochemically by a process termed electrochemically mediated amine regeneration (EMAR). As shown in Fig. 2, the EMAR process involves pumping the CO₂-saturated amines through a series of tanks where Cu-metal is electrochemically stripped to form Cu²⁺ ions, which then displace the absorbed CO₂, releasing the displaced CO₂ as high-pressure gas for storage, and Cu²⁺ ions bound to the amines are electrochemically plated as Cu-metal, regenerating the amine sorbent to its initial state. The EMAR process has been shown to be energetically competitive with thermal regeneration, while offering advantages in modularity and thermal management.

Fig. 2 shows a schematic depiction of the electrochemical cell system 100 structured to carry out the EMAR process. Fig. 2 shows a liquid sorbent 120', specifically a liquid amine-containing solution (R-NH₂), being saturated with CO₂ in the sorbent tank 105. The liquid sorbent solution 120' is pumped through an electrochemical cell 130 having a first compartment 132 containing Cu²⁺ ions, second compartment 134, and a membrane 136 separating the compartments 132, 134. The solution 120' is first pumped to a first compartment 132 of the electrochemical cell 130 containing Cu²⁺ ions where the Cu-ions exchange with the CO₂ bound to the amines, marked as step (a). The solution containing Cu-exchanged amines and CO₂ is then pumped to a flash tank 110, marked as step (b), where CO₂ is allowed to gas-off to a storage facility B, marked as step (c). Finally, the Cu-bound amines are regenerated in the second compartment 134 of the electrochemical cell 130 by electro-plating Cu onto a Cu-electrode 138 and pumping the pristine amines back to the sorbent tank 105. To allow the electrochemical cell 130 to operate, the cell contains a supporting electrolyte with a Cu-salt 140, and the anion-exchange membrane 136, which allows the supporting anions from the electrolyte salt to pass through, but blocks the Cu cations.

The liquid sorbent systems are typically pumping systems utilizing multiple tanks or chambers to move liquid between places. The CO₂ is typically pumped from the initial sorbent tank to one or more containers before it can be removed from the system. This increases spatial requirements, complexity, and cost.

The use of liquid amine sorbents has not been possible in DAC applications because the high volumes of air that need to be processed volatize the sorbent, leading to unacceptable losses. Additionally, the requirement that a DAC sorbent be a solid has precluded the use of electrochemical regeneration schemes such as EMAR in previously reported DAC applications.

Yet, there is an imminent need to improve atmospheric CO₂ sequestration systems, especially regeneration of amine-based sorbents so that mankind can reduce the concentration of CO₂ emissions and remove legacy CO₂ from the air to prevent further progress of climate change.

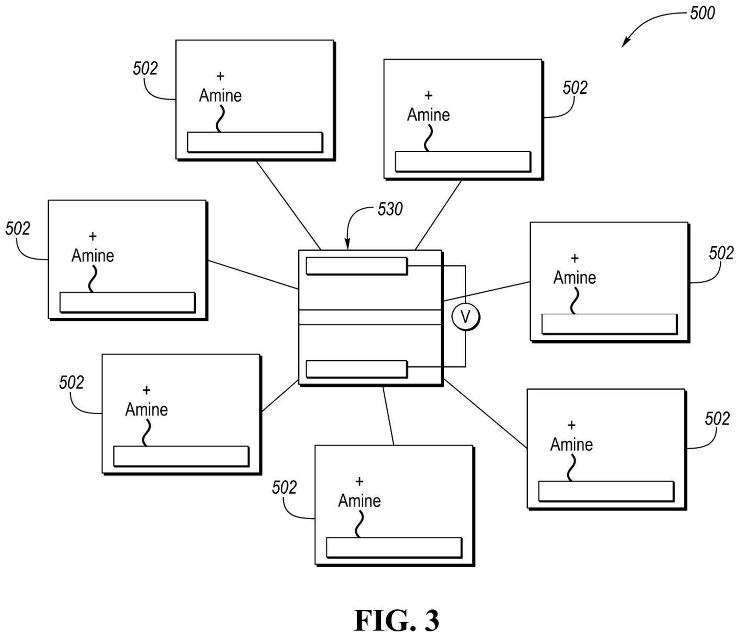

In one or more embodiments, a system structured to sequester CO₂ from dilute sources is disclosed. The system may be a DAC system. The system is arranged to capture CO₂ from air, atmosphere. The capture may be direct capture. The CO₂ may be anthropogenic CO₂, legacy CO₂, naturally produced CO₂, CO₂ from various sources such as decomposition CO₂, ocean release CO₂, respiration CO₂, industrial sources CO₂, deforestation CO₂, fossil fuel burning CO₂, transportation CO₂, fuel combustion CO₂, exhaust CO₂, the like, or their combination. The system includes several components which cooperate mechanically, physically, chemically, fluidly, or a combination thereof. Non-limiting examples of the systems disclosed herein are shown in Figs. 3, 4A, 4B, and 5.

The system disclosed herein includes at least one container. The system may include 2, 3, 4, 5, 6, or more containers. But the system may include a single container or just two containers. The container may be a tank, vessel, compartment, canister, capsule, tub, chamber, cistern, flask, receptacle, or the like. The container may be a closed, enclosable, openable, sealable, and/or resealable container.

The container may include or house a solid CO₂ sorbent having a porous support and amine-based chemistry which is attached or immobilized on the support. The sorbent may be a solid amine sorbent. The sorbent may be a DAC sorbent. The sorbent may be an amine-functionalized sorbent. Amine-based sorbents allow for efficient absorption of CO₂ due to high chemical reactivity with CO₂ and relatively low cost. Non-limiting example support materials may include mesoporous silica or polymeric materials such as cellulose, polymethylmethacrylate (PMMA), or polystyrene (PS). The amine may be attached by impregnation, grafting or the like.

The container may include one or more air inputs structured as resealable or enclosable openings, one or more conduits connecting one or more portions of the system and arranged to lead one or more fluids between various portions of the system. The fluids may be air, exchange liquid(s), electrolyte(s), *etc.*

The system may further include one or more exchange fluids or solutions. The system may include a first exchange fluid and a second exchange fluid, which may be the same or different. The exchange fluids may differ in their volume, composition, and/or other properties. An exchange fluid may be a fluid or solution including a chemical component which strips a previously-bound component from the solid sorbent. The previously-bound component may be CO₂, CO₂ related electrochemical intermediates, metal ion(s), M1, or a combination thereof. The component may have selectivity, preferential affinity, and/or high chemical reactivity towards the CO₂, another chemical component, or amines. Selectivity or preferential affinity of the component may be defined as the discrimination shown by a reagent (component) in competitive attack on two or more substances (such as CO₂ and amines or M1 and amines).

In a non-limiting example, the exchange fluid may include a component structured to strongly bind to CO₂ such that when the exchange fluid comes in contact with the CO₂-bound in the solid sorbent, the CO₂ is removed from the sorbent and binds to the component instead. In another non-limiting example, an exchange fluid may include a component structured to strongly bind to amines such that when the exchange fluid comes in contact with the CO₂-bound in the solid sorbent, the CO₂ is removed from the sorbent and the component binds to the sorbent instead. In yet another non-limiting example, an exchange fluid may include a component structured to strongly bind to another component such as metal ion(s) such that when the exchange fluid comes in contact with the other component (metal ion(s)) previously bound in the solid sorbent, the other component (metal ion(s)) is removed from the sorbent and binds to the component instead.

The exchange fluid may be provided, structured, or configured to remove the CO₂ from the solid sorbent, the system, or both, and/or regenerate the solid sorbent. The exchange fluid is thus structured to mediate transport of CO₂, related electrochemical intermediates, and/or other components in the systems disclosed herein. For example, the one or more exchange fluids may be thus structured to mediate transport of CO₂, related electrochemical intermediates, and/or other components between the solid sorbent in the at least one compartment and the electrodes of the electrochemical cell. The exchange fluid enables use of a single compartment which may be flooded and drained with one or more exchange fluids during steps one, two, and/or three.

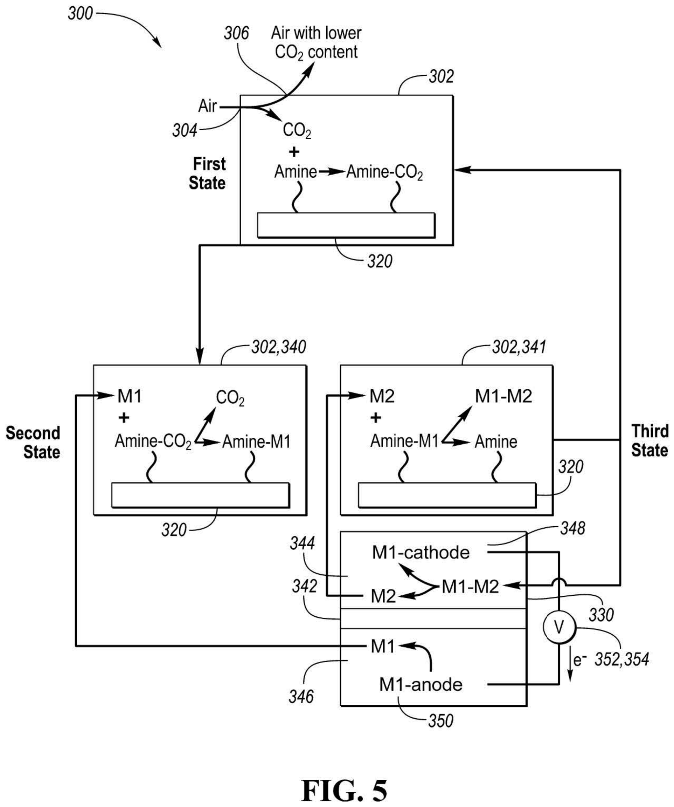

The exchange fluid may be an aqueous solution. A non-limiting example of the exchange fluid may be pure amine liquid or liquid mixture of amines. The component in the exchange fluid may include one or more molecules M1 or M2. The molecules M1 may be metal ion(s). Non-limiting example of the metal ions may be Cu²⁺, Zn²⁺, Pb²⁺, Ag²⁺, Mg²⁺, or Al³⁺. M1 may be present or dissolved in the exchange fluid. The exchange fluid may be provided into the at least one compartment after a desired and/or predetermined amount of CO₂ saturation into the solid sorbent is reached. M1 may be chemically structured to bind to the solid sorbent amines and thus remove, desorb, displace CO₂ previously absorbed onto the solid sorbent. In other words, the CO₂ may be removed or stripped from the solid sorbent, and M1 may bind to the sorbent instead. A non-limiting example of such a chemical component M1 is shown in Fig. 5 and Example 2.

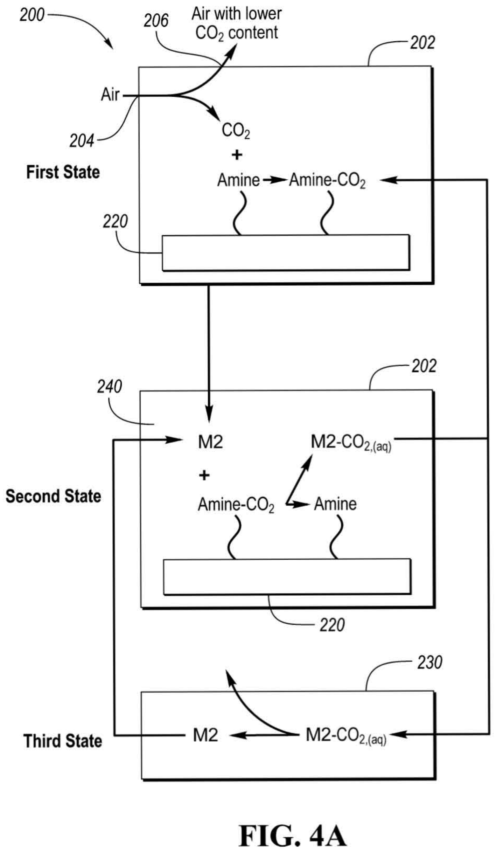

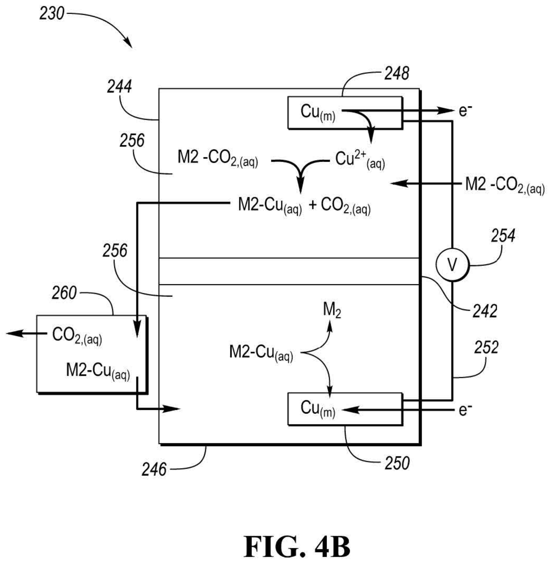

The molecule(s) M2 may be dissolved in the exchange fluid. The exchange fluid may be provided into the at least one compartment after a desired and/or predetermined amount of CO₂ saturation into the solid sorbent is reached. The molecules M2 may be chemically structured to bind the CO₂ previously absorbed onto the solid sorbent. In other words, the CO₂ may be removed or stripped from the solid sorbent into a dissolved state and bound to the molecule M2 instead. A non-limiting example of such a chemical component M2 is shown in Figs. 4A, 4B, and Example 1.

M2 may be ethylenediamine (EDA), diethylenetriamine (DETA), triethylenetetramine (TETA), monoethanolamine (MEA), or another small molecular amine. The dissolved molecule M2 in the exchange solution may be chosen on the basis of the binding energy between M2, CO₂, and/or the metal ion(s) M1. M2 may be chosen such that the binding energy between M1 and M2 is larger than that between M1 and the solid amine sorbent. M2 may be chosen such that the binding energy between M2 and CO₂ is larger than that between CO₂ and the solid amine sorbent.

The system further includes an electrochemical cell. The electrochemical cell may include one or more compartments such as the first compartment and the second compartment. The compartments may be divided by a membrane, which is semi-permeable, selectively permeable, or non-permeable to one or more chemical species, components, or ions. The cell may include an electrolyte. The electrolyte may include a salt solution. A non-limiting example solution may be Cu-salt solution. Other salt solutions may include Zn, Pb, Ag, Mg, Al, or other metals. Each compartment may include an electrode, a cathode and an anode, respectively. The electrodes may be symmetrical or asymmetrical. The electrodes may include metal ions such as M1. The electrodes may include a metallic form of the M1 elements such as Cu, Zn, Pb, Ag, Mg, Al, or the like. The electrode(s) may include one or more layered oxides of the form (M1)ₐ(X)O_{z} where X is V, Cr, Mn, Ni, Co, or Fe; with 0 < a < 1 and 1.9 < z < 2.6.

The cell may further include an electrical circuit connecting the electrodes and including a voltage source. The cell may be connected to the at least one container via one or more conduits. The electrochemical cell may be provided, structured, or configured to regenerate molecule M1, M2, or both, and/or release CO₂.

The system disclosed herein may have one or more states, stages, or steps. For example, the system may have 1, 2, or 3 states. Each state may be repeatable. Each state may include one or more cycles. In the first state, the CO₂ sorbent may bind CO₂ until a predetermined point. The predetermined point may reflect a full or partial saturation point or a predetermined level of CO₂ saturation. In the first state, the air with lower concentration of CO₂ may exit the system, compartment, or both. The first state may be a state of CO₂ saturation and/or CO₂ release.

In the second state, the compartment may be flooded with an exchange fluid. The compartment may be flooded with two exchange fluids, each separately. The exchange fluids may be provided into the container and drained, one by one. The CO₂ may be bound in the exchange fluid in the form of carbamate, bicarbonate, the like, or a mixture thereof. In the second state, the CO₂ may be removed from the solid sorbent and released from the compartment. In the second state, the solid sorbent may be regenerated via the exchange fluid(s) including a component M1, M2, or both. The second state may be a state of CO₂ desaturation and release and/or solid sorbent regeneration. The regeneration of the exchange fluid may be utilizing one or more intermediates or products from the chemical reactor or the electrochemical cell, for example hydroxyl ions (OH⁻), protons, electrons, or a combination thereof.

In the third state, the exchange fluid with M1, M2, M1-M2 complex(s), and/or M2-CO₂, may be removed from the compartment, which houses the solid sorbent, and provided into an electrochemical cell. In the electrochemical cell, component chemistry and/or voltage may be utilized to regenerate M1, M2, or both. In the electrochemical cell, CO₂ may be removed from M2-CO₂ and released into storage and/or for utilization. The third state may be a state of M1, M2 regeneration.

The system may lack or be free of a heating element (internal or external), for example a heating element connected to or influencing and increasing temperature of the one or more compartments housing the solid sorbent. The temperature of the system and of the sorbent in stages one, two, and/or three may be relatively constant, without fluctuations, without desirable or predetermined fluctuations, without increase above about 70°C, 80°C, 90°C, 100°C, 110°C, 120°C, 130°C, or more. The temperature of the sorbent may be maintained, kept, retained at a relative constant value throughout the first, second, and third states.

The system may include a single chamber containing the solid CO₂ sorbent such that CO₂ removal may be realized within the single chamber. The single compartment may include the solid sorbent binding the CO₂, and the CO₂ may be released from the single compartment after flooding the compartment with an exchange liquid. After the flooding, the CO₂ may be directly released into a storage and/or for utilization. Alternatively, after the flooding, the CO₂ may be bound to a molecule M2 and stay in the compartment which may be drained of the exchange liquid, air input may be opened, and next cycle or round of CO₂ sorption onto the solid sorbent may be realized.

The traditional liquid sorbent systems typically pump the entire volume of the liquid sorbent with the bound CO₂ through the regeneration system of the electrochemical cell. The final CO₂ efficiency is thus determined by the entire process including sorption and regeneration. In contrast, the system disclosed herein features physically separate sorption and desorption stage and the regeneration of M1, M2 stage. The system disclosed herein may thus increase CO₂ removal efficiency by having multiple cycles of CO₂ sorption (first state), solid sorbent regeneration (second state), or both before regeneration of M1, M2, or both are initiated due to the possibility of repeated flooding and draining with the exchange fluid(s). Similarly, the system disclosed herein may include multi-step M1, M2 regeneration to increase efficiency of the regeneration of M1, M2, or both. In one or more embodiments, the second and third step may be repeated before the first step in the next cycle begins.

Since the systems described herein may utilize a single chamber containing the solid CO₂ sorbent, the efficiency of the CO₂ removal may be determined by the quantity of the fluid which is being input and removed, quantity of the fluid being cycled, *etc.* In one or more embodiments, about 80-100, 82-98, or 85-95 vol.% of the first exchange liquid, second exchange liquid, or both, added during a given cycle, may be removed from the system at a predetermined time or interval.

In the systems described herein, the EMAR or electrochemical cell may be used only for the regeneration of the molecules M1, M2, or both while the regeneration of the sorbent, and/or release of CO₂ may happen in the original compartment. This is in contrast to the liquid sorbent systems which typically pump the entire volume of the liquid sorbent bound to CO₂ through the EMAR system. The EMAR or electrochemical cell is thus required as a middle step for CO₂ removal in the traditional system, but not in the herein-disclosed system.

In one or more embodiments, the system described herein may include multiple compartments, each housing a solid sorbent. A non-limiting example of such system 500 is shown in Fig. 3. The multiple compartments 502 may be flooded and drained one time or multiple times before M1, M2, M1-M2, and/or M2-CO₂ regeneration stage in the electrochemical cell 530 is initiated. In other words, the system may include 1, 2, 3, 4, 5, 6, 7, 8, 9, 10, or more compartments 502 which may each have or cycle between states one and two. 502 may correspond to 202, 302, or another configuration of the compartment. The system may also include a single regeneration system configured as an electrochemical cell or EMAR 530 to provide the third state. 530 may correspond to 230, 330, or another configuration of the cell. The single regeneration system 530 may be common to all the containers 502. The system may thus include one electrochemical cell fluidly connected to the multiple compartments and accepting the one or more exchange fluids from the multiple compartments. Such system has the advantage of lower capital cost.

The chemistry of the exchange fluids and its components may be the same or different for the multiple compartments. The volumes of the compartments, the exchange fluids may be the same or different. The single cell may accept the fluids from at least some or all of the compartments at the same time. Alternatively, the single cell may accept the fluids from various compartments in a predetermined manner, random manner, scheduled manner, one by one, two at a time, *etc.*

In one or more embodiments, the system disclosed herein may further include an electrochemical CO₂ utilization process wherein captured CO₂ is further modified to produce products in addition to or instead of CO₂. Integration of carbon capture and subsequent electrochemical utilization of captured CO₂ may eliminate unnecessary processing steps compared to those done in separate processes. Additionally, electrochemical utilization of captured CO₂ may reduce the need for, complexity, and/or cost of monitoring storage of the captured CO₂.

The captured CO₂ may be modified by reducing the CO₂ molecule to form different products. The products may be gases, liquids, or both. The products may include molecules such as carbon monoxide (CO), methane (CH₄), methanol (CH₃OH), formic acid (HCOOH), ethylene (C₂H₄), ethanol (C₂H₆O), ethane (C₂H₆), propionaldehyde (C₂H₅CHO), propanol (C₃H₇OH), propylene (C₃H₆), acetic acid (CH₃COOH), urea (CO(NH₂)₂), oxalic acid (C₂H₂O₄), acetaldehyde (CH₃CHO), or other hydrocarbons. Such products may serve as building blocks for sustainable fuels, fertilizers, polymers, and other materials typically made from oil or petroleum. Accordingly, the system may be used to produce products that may replace fossil fuel-derived chemicals while providing a route to utilize atmospheric CO₂.

The production of products via reducing captured CO₂ requires energy input. As such, the reduction of captured CO₂ may take place in an electrochemical cell. The electrochemical cell may include one or more compartments such as the first compartment and the second compartment. Each compartment may include an electrode, a cathode and an anode, respectively. The electrodes may be symmetrical or asymmetrical. The anode may include a precious metal such as IrO₂, RuO₂, or the like, or a non-precious metal such as NiO, NiFe, Co₃O₄, CoOOH, MnO₂, or the like. The cathode materials may vary depending on the desired product. For example, the cathode may include Au, Ag, Zn, Pd, Ga, the like, or a mixture thereof for CO production. In another example, the cathode may include Ga, Pd, Au, Ag, Zn, Ni, Fe, Pt, Ir, Ru, Rh, Ti, the like, or a mixture thereof for syngas production. In yet another example, the cathode may include Pb, Hg, Tl, In, Sn, Cd, Bi, the like, or a mixture thereof for formic acid production. For other products, the cathode may include Cu or a Cu alloy.

The compartments may be divided by a membrane, which is semi-permeable, selectively permeable, or non-permeable to one or more chemical species, components, or ions. A non-limiting example membranes include a bipolar membrane. The bipolar membrane may comprise an anionic layer, selectively permeable to anions, and a cationic layer, selectively permeable to cations. The bipolar membrane may be operating in reverse-bias, wherein the cation layer is facing the cathode, and the anion layer is facing the anode. Another non-limiting example of a membrane includes a cation-exchange membrane. The cation-exchange membrane may be a single layer selectively permeable to cations. Yet another non-limiting example of a membrane includes an anion-exchange membrane. The anion-exchange membrane may be a single layer selectively permeable to anions.

The electrochemical cell may include an electrolyte. The electrolyte may include a salt solution. A non-limiting example solution may be K-salt solution. Other salt solutions may include alkaline salts other than K, basic solutions such as potassium hydroxide (KOH) and sodium hydroxide (NaOH), acidic solutions such as sulfuric acid, (H₂SO₄) perchloric acid (HClO₄), and citric acid (C₆H₈O₇), and buffer solutions such as sodium citrate (Na₃C₆H₅O₇).

The cell may further include an electrical circuit connecting the electrodes and including a voltage source. The electrochemical cell may be provided, structured, or configured to regenerate molecule M1, M2, both, release CO₂, and/or generate products by reducing the CO₂.

According to an embodiment, the system disclosed herein may have one or more states, stages, or steps. For example, the system may have 1, 2, or 3 states. Each state may be repeatable. Each state may include one or more cycles. In the first state, the CO₂ sorbent may bind CO₂ within a compartment housing the solid sorbent until a predetermined point. The predetermined point may reflect a full or partial saturation point or a predetermined level of CO₂ saturation. In the first state, the air with lower concentration of CO₂ may exit the system, compartment, or both. The first state may be a state of CO₂ saturation and/or CO₂ release.

In the second state, the compartment may be flooded with an exchange fluid. The compartment may be flooded with two exchange fluids, each separately. The exchange fluids may be provided into the container and drained, one by one. In the second state, the CO₂ may be removed from the solid sorbent and released from the compartment. In the second state, the solid sorbent may be regenerated via the exchange fluid(s) including a component M1, M2, or both. The second state may be a state of CO₂ desaturation and release and/or solid sorbent regeneration.

In the third state, the exchange fluid with M1, M2, M1-M2 complex(s), and/or M2-CO₂, may be removed from the compartment, which houses the solid sorbent, and provided into an electrochemical cell. Water may also be provided into the electrochemical cell. In the electrochemical cell, component chemistry and/or voltage may be utilized to regenerate M1, M2, or both. In the electrochemical cell, CO₂ may be removed from M2-CO₂. In the electrochemical cell, H₂O may be added and CO₂ may be reduced to form desirable products. The third state may be a state of M1, M2 regeneration and/or CO₂ reduction.

In other embodiments, the system may include a chemical reactor in place of the electrochemical cell. The chemical reactor may be a mineralization reactor. The mineralization reactor may be provided, structured, or configured to precipitate a solid product from an exchange fluid-CO₂ solution formed in the compartment housing the solid sorbent. Mineralization of captured CO₂ may reduce the need for, complexity, and/or cost of monitoring storage of the captured CO₂.

The exchange fluid may be an aqueous amine solution. Non-limiting examples of amines include monoethanolamine (MEA), diethalolamine (DEA), triethanol amine (TEA), ethylenediamine (EDA), diethylenetriamine (DETA), triethylenetetramine (TETA), 2-(2-Aminoethyl-amino)ethanol (AEEA), 2-amino-2-methyl-1-propanol (AMP), piperazine (PZ), piperazine derivatives, and other amine-based molecules. These exemplary amines may be dissolved in water at a concentration of about 30 wt.% (7M), or at concentrations higher or lower. Commonly used solvents may include 7M MEA, 8M PZ, or the like.

The mineralization reactor may be in fluid connection with the compartment housing the solid sorbent. The exchange fluid-CO₂ solution may be removed from the compartment housing the solid sorbent and provided to the mineralization reactor. A source of cations and a source of alkalinity may also be added. Introduction of cations increasing the alkalinity of the solution may shift the equilibrium of the solution to form stable carbonate molecules. The increased alkalinity may also help facilitate the regeneration of the exchange fluid.

The cations and alkalinity may come from the same source. The source may be alkaline metal minerals. The alkaline metal minerals may include calcium, magnesium, sodium, or the like. A source of Mg²⁺ cations may include Mg(OH)₂, MgO, Mg₂SiO₄, or a combination thereof. A source of Na²⁺ ions may include NaOH, Na₂SiO₃, Na₂CO₃, or a combination thereof. A source of Ca²⁺ may include CaO, slaked lime (Ca(OH)₂), CaCl₂, coal fly ash, steel slag, blast furnace slag, waste gypsum (CaSO₄), or a combination thereof. Accordingly, the system may be used to repurpose and neutralize industrial alkaline wastes and/or utilize naturally occurring silicates. In some embodiments, at least a portion of the neutralization of the industrial waste and the regeneration of the exchange fluid may be simultaneous.

The mineralization reactor may include a precipitation tank. The precipitation tank may be a component of the mineralization reactor or may be a separate structure in fluid connection with the mineralization reactor. The mineralization reactor may also include a filter. The filter may be a component of the mineralization reactor, a component of the precipitation tank, or may be a separate structure in fluid connection with the mineralization reactor and/or precipitation tank. The precipitation tank and/or filter may be configured to separate the solid carbonate product from the exchange fluid and other liquids formed in the reactor.

According to an embodiment, the system disclosed herein may have one or more states, stages, or steps. For example, the system may have 1, 2, or 3 states. Each state may be repeatable. Each state may include one or more cycles. In the first state, the CO₂ sorbent may bind CO₂ within a compartment housing the solid sorbent until a predetermined point. The predetermined point may reflect a full or partial saturation point or a predetermined level of CO₂ saturation. In the first state, the air with lower concentration of CO₂ may exit the system, compartment, or both. The first state may be a state of CO₂ saturation and/or CO₂ release.

In the second state, the compartment may be flooded with an exchange fluid. The compartment may be flooded with two exchange fluids, each separately. The exchange fluids may be provided into the container and drained, one by one. In the second state, the CO₂ may be removed from the solid sorbent and released from the compartment. In the second state, the solid sorbent may be regenerated via the exchange fluid(s) including a component M1, M2, or both. The second state may be a state of CO₂ desaturation and release and/or solid sorbent regeneration.

In the third state of a system utilizing a mineralization reactor, the exchange fluid-CO₂ solution may be removed from the compartment, which houses the solid sorbent, and provided into a mineralization reactor. In the mineralization reactor, a source of cations and a source of alkalinity may be added. Introduction of cations and an increase in alkalinity may shift the equilibrium of the solution to form stable carbonate molecules. The third state may be a state of M1, M2 regeneration and/or CO₂ mineralization.

The system disclosed herein may thus combine electrochemical regeneration applicable with a solid DAC sorbent for direct capture of atmospheric CO₂ or capture of CO₂ from dilute sources such as air. The advantages of the system described herein include an energy efficient route to regenerate solid amine sorbents without requiring heating, which offers substantial advantages in improved energy efficiency, increased sorbent lifetime, simplified thermal management, and modularity. Specifically, regarding thermal management, high heat or steam is not needed for the sorbent regeneration. As such, the sorbent does not succumb to thermal degeneration, and the system's energy demands are lower than the prior art systems.

### EXAMPLES

### Example 1

In at least one embodiment, schematically depicted in Figs. 4A, 4B, a non-limiting example system 200 may include a compartment 202 with an opening 204 structured as an air input. The compartment 202 may include a solid amine-functionalized sorbent 220. The system may have one or more states, steps, or stages. In the first state, upon entry into the compartment 202, the CO₂ from the air is bound to the amine of the sorbent 220, and air with a lower CO₂ concentration exits via an opening 206 structured as an air output. In the first state, within the compartment 202, the air may be passed through the solid amine-functionalized sorbent 220 until a desired or predetermined level of CO₂ is reached.

In the second state, stage, or step, the external air flow is stopped, and the sorbent 220 is regenerated. For the purposes of the regeneration, the sorbent 220 in the compartment 202 may be flooded with a solution 240 containing dissolved molecules M2. The CO₂ may be stripped from the solid sorbent 220 by the solution 240. The M2 molecule may bind to the CO₂ stronger than the solid amine such that the CO₂ transitions from being bound to the solid sorbent 220 to being bound to the molecule M2. Once the aqueous M2-CO₂ solution removes a desired amount of CO₂ from the solid sorbent, the solution may be separated from the solid sorbent, allowing the sorbent to return to the first state, ready for additional CO₂ capture in the next cycle. The separation may be provided by draining the M2-CO₂ solution via the exit opening 206 or another opening. The solid sorbent 220 is thus regenerated via the exchange solution 240, not an EMAR or electrochemical cell.

In the system 200, an electrochemical cell 230 may be utilized for the regeneration of the molecule M2. The drained M2-CO₂ solution may be either reused for the second state in the following cycle(s), passed through an EMAR cycle to regenerate molecule M2 and extract the bound CO₂, or both.

In a third state, stage, or step, when the M2-CO₂ solution is passed through the EMAR cycle, an electrochemical cell 230 is utilized. A non-limiting example of the EMAR system with the M2-CO₂ solution is schematically shown in Fig. 4B. The electrochemical cell 230 may include a membrane 242 separating two compartments 244, 246, each having an electrode 248 (cathode), 250 (anode). The electrodes may be connected via an electrical circuit 252 with a voltage source 254. The electrochemical cell 230 may be flooded with an electrolyte 256 such as Cu-salt electrolyte.

The M2-CO₂ solution enters the first compartment 244 of the cell 230 which contains Cu²⁺ ions. The Cu²⁺ ions exchange with the CO₂ bound to the molecule M. The solution of M2-Cu together with CO₂ may be moved into a tank 260. The moving may be by pumping, draining, or otherwise. CO₂ may be removed directly from the first compartment 244. CO₂ may be gassed-off to a storage facility or removed from the system 200. M2-Cu solution may be moved into the second compartment 246 of the cell 230, via the tank 260 or directly, for example by pumping or drainage. The Cu may be electroplated onto the electrode 250, utilizing the circuit 252 and the voltage source 254. M2 molecule may be removed from the second compartment 246 to the compartment 202 for utilization in the second state of the next cycle(s).

### Example 2

In at least one embodiment, schematically depicted in Fig. 5, a non-limiting example system 300 may include a compartment 302 with an opening 304 structured as an air input. The compartment 302 may include a solid amine-functionalized sorbent 320. The system 300 may have one or more states, steps, or stages. In the first state, upon entry into the compartment 302, the CO₂ from the air is bound to the amine of the sorbent 320, and air with a lower CO₂ concentration exits via an opening 306 structured as an air output. In the first state, within the compartment 302, the air may be passed through the solid amine-functionalized sorbent 320 until a desired level of CO₂ is reached.

In the second state, stage, or step, the external air flow is stopped, and CO₂ is stripped from the sorbent and removed from the system 300. For the purposes of the stripping, the sorbent 320 in the compartment 302 may be flooded with a first solution 340 containing molecule M1 which may be metal ion(s). The metal ion(s) M1 may favorably bind to the amine groups in the solid sorbent 320, displacing the bound CO₂ into the closed sorbent chamber 302. Thus, the CO₂ may be stripped from the solid sorbent 320 by the metal ion(s) M1 in the first solution 340. The displaced CO₂ is then removed from the compartment 302 for subsequent storage or utilization. The removal may be by venting. Once the CO₂ has been removed from the compartment 302, the first solution 340 is removed from the compartment 302, for example by draining, pumping, sucking, or the like.

In a third state, the first solution 340 may be replaced with a second solution 341, which contains a molecule M2 structured to strongly bind to the metal ion(s) M1 and stripping the metal ion(s) M1 from the solid sorbent 320. In a non-limiting example, M2 may include ethylenediamine (EDA) or another suitably chosen small molecular amine. Once the metal ions M1 have reacted with M2, a M1-M2 complex is formed in the second solution 341, which is then removed from the compartment 302. The pristine state of the solid sorbent 320 is thus recovered, and the sorbent 320 may be used in the next CO₂ sorption cycle. The solid sorbent 320 is thus regenerated via the second solution 341, not an EMAR or electrochemical cell.

In the system 300, an electrochemical cell 330 may be utilized for the regeneration of M1, M2, or both. The electrochemical cell 330 may include a membrane 342 separating two compartments 344 (cathode chamber), 346 (anode chamber), each having an electrode 348 (cathode), 350 (anode). The electrodes may be connected via an electrical circuit 352 with a voltage source 354. After removal from the compartment 302, the second solution 341 including the M1-M2 complex(es) may be then passed through the electrochemical cell 330, where the metal ions are electrochemically removed from the second solution 341. The removal may be realized by electroplating or intercalation, for example Cu electrodeposition onto a metallic Cu electrode or Ag intercalation into a layered oxide cathode 348. The removal of the metal ions regenerates the initial state of the second solution 341. The anode chamber 346 may contain a symmetric anode 350, where M1 may be stripped from the anode into the anode chamber 346, creating the source of metal ions M1 for the first solution 340.

### Example 3

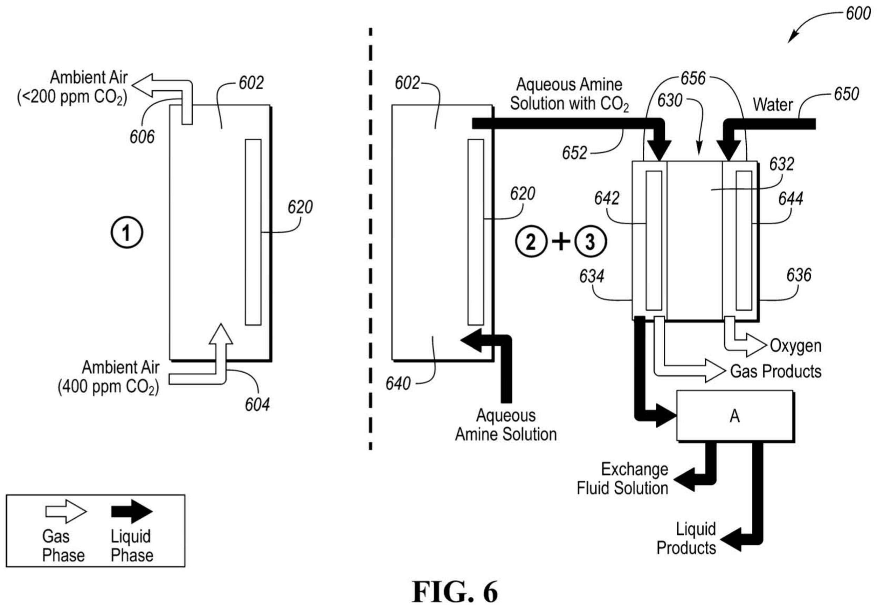

In at least one embodiment, schematically depicted in Fig. 6, a non-limiting example system 600 may include a compartment 602 with an opening 604 structured as an air input. The compartment 602 may include a solid amine-functionalized sorbent 620. The system may have one or more states, steps, or stages. In the first state, upon entry into the compartment 602, the CO₂ from the air is bound to the amine of the sorbent 620, and air with a lower CO₂ concentration exits via an outlet 606 structured as an air output. In the first state, within the compartment 602, the air may be passed through the solid amine-functionalized sorbent 620 until a desired or predetermined level of CO₂ is reached.

In the second state, stage, or step, the external air flow is stopped, and the sorbent 620 is regenerated. For the purposes of the regeneration, the sorbent 620 in the compartment 602 may be flooded with a solution 640 containing dissolved molecules M2. The CO₂ may be absorbed from the solid sorbent 620 by the solution 640. The M2 molecule may bind to the CO₂ stronger than the solid amine such that the CO₂ transitions from being bound to the solid sorbent 620 to being bound to the molecule M2. Once the aqueous M2-CO₂ solution removes a desired amount of CO₂ from the solid sorbent, the solution may be separated from the solid sorbent, allowing the sorbent to return to the first state, ready for additional CO₂ capture in the next cycle. The separation may be provided by draining the M2-CO₂ solution via the outlet 606 or another outlet. The solid sorbent 620 is thus regenerated via the exchange solution 640, not an EMAR or electrochemical cell.

In the system 600, an electrochemical cell 630 may be utilized for the regeneration of the molecule M2. The drained M2-CO₂ solution may be either reused for the second state in the following cycle(s), passed through the electrochemical cell 630 to regenerate molecule M2, extract the bound CO₂, reduce the extracted CO₂, or a combination thereof.

In a third state, stage, or step, the M2-CO₂ solution is passed through the electrochemical cell 630. The electrochemical cell 630 may include a membrane 632 separating two compartments 634, 636, having an electrode 642 (cathode), 644 (anode). In a non-limiting example, the cathode 642 may include Ag catalyst, and the anode 644 may include IrO₂ catalyst. The electrodes may be connected via an electrical circuit with a voltage source. The membrane 632 may be a bipolar membrane, which may be operating in reverse bias mode wherein the cation exchange layer is facing the anode 644. The electrochemical cell 630 may be flooded with an electrolyte 656 such as K-salt electrolyte. An electrolyte salt, such as 1M KCl, may be added to the aqueous M2-CO₂ solution to improve the conductivity of the electrolyte 656.

The M2-CO₂ solution enters the first compartment 634 of the cell 630 through an inlet 652. The first compartment 634 contains the cathode 642. The M2-CO2 solution may comprise molecules generically represented as RNH₃⁺ + RNHCOO⁻. RNHCOO⁻ may be described as a carbamate ion formed from the captured CO₂ binding to the molecule M2 and dissolving in the solution 640. Water may be provided to the second compartment 636 through a water feed or inlet 650. The second compartment 636 contains the anode 644. The cathode 642 may catalyze an electrochemical reduction reaction, reaction 1.

(1) RNH₃⁺ + RNHCOO⁻ + 2H⁺ + 2e⁻ → RNH₃⁺ + RNH₂ + CO + OH⁻ → 2RNH₂ + CO + H₂O

The anode 644 may catalyze an electrochemical oxidation reaction, reaction 2.

(2) 2OH⁻ → 1/2O₂ + H2O + 2e⁻

A third reaction may take place at the membrane 632, reaction 3.

(3) H₂O → OH⁻ + H⁺

Accordingly, reaction 1 may reduce the captured CO₂ to form CO while also regenerating the solution 640. At least a portion of the utilization through reduction and regeneration may thus be performed simultaneously. In one embodiment, about 40 to 100 percent of the utilization and regeneration may be simultaneous. In another embodiment, about 60 to 100 percent of the utilization and regeneration may be simultaneous. In yet another embodiment, about 80 to 100 percent of the utilization and regeneration may be simultaneous. The CO or other gas products may be removed directly from the first compartment 634 for storage or subsequent utilization. The solution 640 regenerated in reaction 1 may be removed from the first compartment 634 to the compartment 602 for utilization in the second state of the next cycle(s). If additional liquid products are formed in the first compartment 634, the system 600 may further include a mechanism for separating the liquid products from the regenerated exchange solution 640 prior to providing the solution 640 to the compartment 602. Separation of liquids may be provided at A. O₂ produced by reaction 2 may be gassed-off to a storage facility or removed from the system 600.

### Example 4

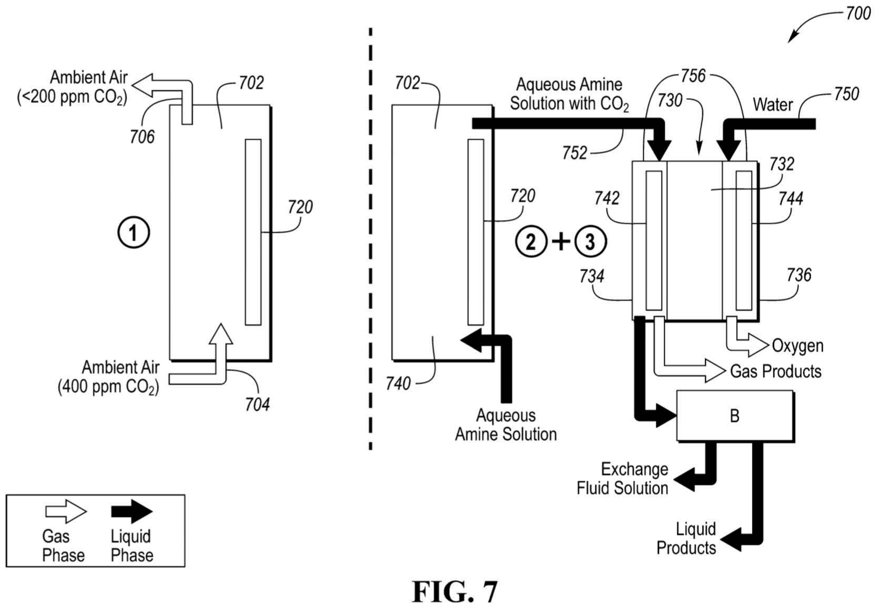

In at least one embodiment, schematically depicted in Fig. 7, a non-limiting example system 700 may include a compartment 702 with an opening 704 structured as an air input. The compartment 702 may include a solid amine-functionalized sorbent 720. The system may have one or more states, steps, or stages. In the first state, upon entry into the compartment 702, the CO₂ from the air is bound to the amine of the sorbent 720, and air with a lower CO₂ concentration exits via an outlet 706 structured as an air output. In the first state, within the compartment 702, the air may be passed through the solid amine-functionalized sorbent 720 until a desired or predetermined level of CO₂ is reached.

In the second state, stage, or step, the external air flow is stopped, and the sorbent 720 is regenerated. For the purposes of the regeneration, the sorbent 720 in the compartment 702 may be flooded with a solution 740 containing dissolved molecules M2. The CO₂ may be absorbed from the solid sorbent 720 by the solution 740. The M2 molecule may bind to the CO₂ stronger than the solid amine such that the CO₂ transitions from being bound to the solid sorbent 720 to being bound to the molecule M2. Once the aqueous M2-CO₂ solution removes a desired amount of CO₂ from the solid sorbent, the solution may be separated from the solid sorbent, allowing the sorbent to return to the first state, ready for additional CO₂ capture in the next cycle. The separation may be provided by draining the M2-CO₂ solution via the outlet 706 or another opening. The solid sorbent 720 is thus regenerated via the exchange solution 740, not an EMAR or electrochemical cell.

In the system 700, an electrochemical cell 730 may be utilized for the regeneration of the molecule M2. The drained M2-CO₂ solution may be either reused for the second state in the following cycle(s), passed through the electrochemical cell 730 to regenerate molecule M2, extract the bound CO₂, reduce the extracted CO₂, or a combination thereof.

In a third state, stage, or step, the M2-CO₂ solution is passed through the electrochemical cell 730. The electrochemical cell 730 may include a membrane 732 separating two compartments 734, 736, having an electrode 742 (cathode), 744 (anode). In a non-limiting example, the cathode 742 may include Ag catalyst, and the anode 744 may include IrO₂ catalyst. The electrodes may be connected via an electrical circuit with a voltage source. The membrane 732 may be a cation-exchange membrane. The electrochemical cell 730 may be flooded with an electrolyte 756 such as K-salt electrolyte. An electrolyte salt, such as 1M KCl, may be added to the aqueous M2-CO₂ solution to improve the conductivity of the electrolyte 756.

The M2-CO₂ solution enters the first compartment 734 of the cell 730 through an inlet 752. The first compartment 734 contains the cathode 742. The M2-CO2 solution may include molecules generically represented as RNH₃⁺ + RNHCOO⁻. RNHCOO⁻ may be described as a carbamate ion formed from the captured CO₂ binding to the molecule M2 and dissolving in the solution 740. Water may be provided to the second compartment 736 through a water feed or inlet 750. The second compartment contains the anode 744. The cathode 742 may catalyze an electrochemical reduction reaction, reaction 4.

(4) RNH₃⁺ + RNHCOO⁻ + 2H⁺ + 2e⁻ → RNH₃⁺ + RNH₂ + CO + OH⁻ → 2RNH₂ + CO + H₂O

The anode 744 may catalyze an electrochemical oxidation reaction, reaction 5.

(5) H₂O → 1/2O₂ + 2H⁺ + 2e⁻

Accordingly, reaction 4 may reduce the captured CO₂ to form CO while also regenerating the solution 740. At least a portion of the utilization through reduction and regeneration may thus be performed simultaneously. In one embodiment, about 40 to 100 percent of the utilization and regeneration may be simultaneous. In another embodiment, about 60 to 100 percent of the utilization and regeneration may be simultaneous. In yet another embodiment, about 80 to 100 percent of the utilization and regeneration may be simultaneous. The CO or other gas products may be removed directly from the first compartment 734 for storage or subsequent utilization. The solution 740 regenerated in reaction 4 may be removed from the first compartment 734 to the compartment 702 for utilization in the second state of the next cycle(s). If additional liquid products are formed in the first compartment 734, the system 700 may further include a mechanism for separating the liquid products from the regenerated exchange solution 740 prior to providing the solution 740 to the compartment 702. Separation of liquids may be provided at B. O₂ produced by reaction 5 may be gassed-off to a storage facility or removed from the system 700.

### Example 5

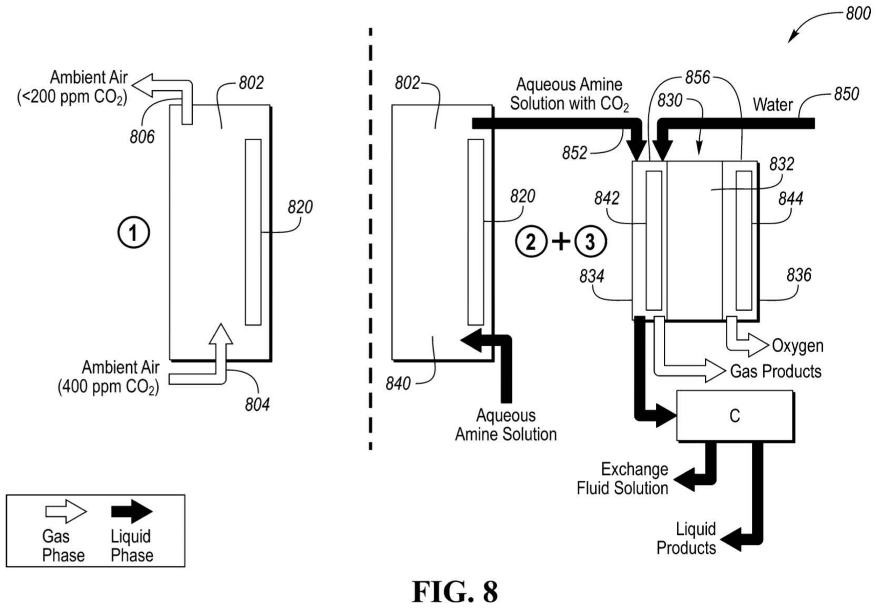

In at least one embodiment, schematically depicted in Fig. 8, a non-limiting example system 800 may include a compartment 802 with an opening 804 structured as an air input. The compartment 802 may include a solid amine-functionalized sorbent 820. The system may have one or more states, steps, or stages. In the first state, upon entry into the compartment 802, the CO₂ from the air is bound to the amine of the sorbent 820, and air with a lower CO₂ concentration exits via an outlet 806 structured as an air output. In the first state, within the compartment 802, the air may be passed through the solid amine-functionalized sorbent 820 until a desired or predetermined level of CO₂ is reached.

In the second state, stage, or step, the external air flow is stopped, and the sorbent 820 is regenerated. For the purposes of the regeneration, the sorbent 820 in the compartment 802 may be flooded with a solution 840 containing dissolved molecules M2. The CO₂ may be absorbed from the solid sorbent 820 by the solution 840. The M2 molecule may bind to the CO₂ stronger than the solid amine such that the CO₂ transitions from being bound to the solid sorbent 820 to being bound to the molecule M2. Once the aqueous M2-CO₂ solution removes a desired amount of CO₂ from the solid sorbent, the solution may be separated from the solid sorbent, allowing the sorbent to return to the first state, ready for additional CO₂ capture in the next cycle. The separation may be provided by draining the M2-CO₂ solution via the outlet 806 or another opening. The solid sorbent 820 is thus regenerated via the exchange solution 840, not an EMAR or electrochemical cell.

In the system 800, an electrochemical cell 830 may be utilized for the regeneration of the molecule M2. The drained M2-CO₂ solution may be either reused for the second state in the following cycle(s), passed through the electrochemical cell 830 to regenerate molecule M2, extract the bound CO₂, reduce the extracted CO₂, or a combination thereof.

In a third state, stage, or step, the M2-CO₂ solution is passed through the electrochemical cell 830. The electrochemical cell 830 may include a membrane 832 separating two compartments 834, 836, having an electrode 842 (cathode), 844 (anode). In a non-limiting example, the cathode 842 may include Ag catalyst, and the anode 844 may include IrO₂ catalyst. The electrodes may be connected via an electrical circuit with a voltage source. The membrane 832 may be a anion-exchange membrane. The electrochemical cell 830 may be flooded with an electrolyte 856 such as K-salt electrolyte. An electrolyte salt, such as 1M KOH, may be added to the aqueous M2-CO₂ solution to improve the conductivity of the electrolyte 856.

The M2-CO₂ solution enters the first compartment 834 of the cell 830 through an inlet 852. The first compartment 834 contains the cathode 842. The M2-CO2 solution may comprise molecules generically represented as RNH₃⁺ + RNHCOO⁻. RNHCOO⁻ may be described as a carbamate ion formed from the captured CO₂ binding to the molecule M2 and dissolving in the solution 840. Water may also be provided to the first compartment 834 via a water feed 850. The cathode 842 may catalyze an electrochemical reduction reaction, reaction 6.

(6) RNH₃⁺ + RNHCOO⁻ + H₂O + 2e⁻ → 2RNH₂ + CO + 2OH⁻

The anode 844 may catalyze an electrochemical oxidation reaction, reaction 7.

(7) 2OH⁻ → 1/2O₂ + H₂O + 2e⁻

Accordingly, reaction 6 may reduce the captured CO₂ to form CO while also regenerating the solution 840. At least a portion of the utilization through reduction and regeneration may thus be performed simultaneously. In one embodiment, about 40 to 100 percent of the utilization and regeneration may be simultaneous. In another embodiment, about 60 to 100 percent of the utilization and regeneration may be simultaneous. In yet another embodiment, about 80 to 100 percent of the utilization and regeneration may be simultaneous. The CO or other gas products may be removed directly from the first compartment 834 for storage or subsequent utilization. The regenerated solution 840 formed in reaction 6, may be removed from the first compartment 834 to the compartment 802 for utilization in the second state of the next cycle(s). If additional liquid products are formed in the first compartment 834, the system 800 may further include a mechanism for separating the liquid products from the regenerated exchange solution 840 prior to providing the solution 840 to the compartment 802. Separation of liquids may be provided at C. O₂ produced by reaction 7 may be gassed-off to a storage facility or removed from the system 800.

### Example 6

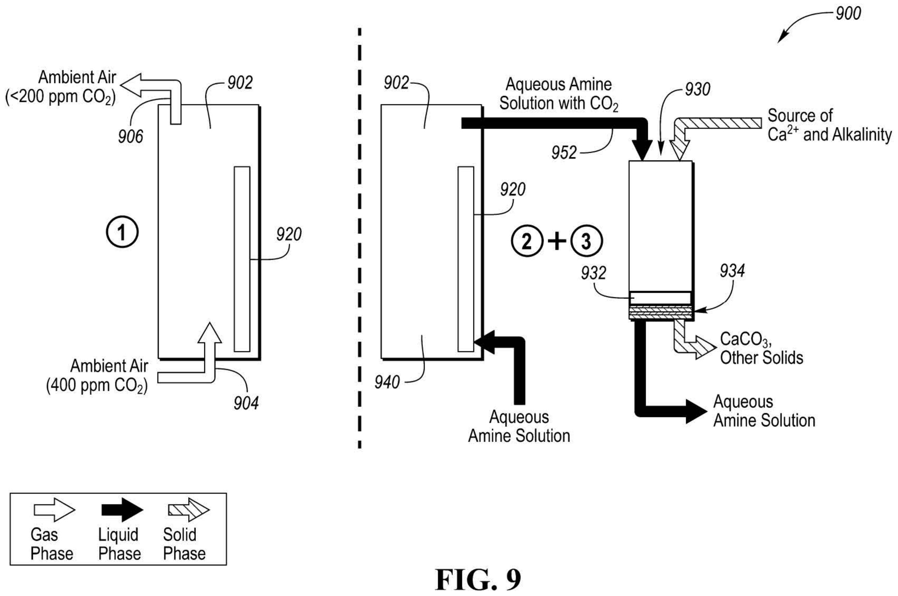

In at least one embodiment, schematically depicted in Fig. 9, a non-limiting example system 900 may include a compartment 902 with an opening 904 structured as an air input. The compartment 902 may include a solid amine-functionalized sorbent 920. The system may have one or more states, steps, or stages. In the first state, upon entry into the compartment 902, the CO₂ from the air is bound to the amine of the sorbent 920, and air with a lower CO₂ concentration exits via an outlet 906 structured as an air output. In the first state, within the compartment 902, the air may be passed through the solid amine-functionalized sorbent 920 until a desired or predetermined level of CO₂ is reached.

In the second state, stage, or step, the external air flow is stopped, and the sorbent 920 is regenerated. For the purposes of the regeneration, the sorbent 920 in the compartment 902 may be flooded with a solution 940 containing dissolved molecules M2. The CO₂ may be absorbed from the solid sorbent 920 by the solution 940. The M2 molecule may bind to the CO₂ stronger than the solid amine such that the CO₂ transitions from being bound to the solid sorbent 920 to being bound to the molecule M2. Once the aqueous M2-CO₂ solution removes a desired amount of CO₂ from the solid sorbent, the solution may be separated from the solid sorbent, allowing the sorbent to return to the first state, ready for additional CO₂ capture in the next cycle. The separation may be provided by draining the M2-CO₂ solution via the outlet 906 or another opening. The solid sorbent 920 is thus regenerated via the exchange solution 940, not an EMAR or electrochemical cell.

In the system 900, a mineralization reactor 930 may be utilized for the regeneration of the molecule M2. The drained M2-CO₂ solution may be either reused for the second state in the following cycle(s), passed through a mineralization cycle to regenerate molecule M2, extract the bound CO₂, mineralize the extracted CO₂, or a combination thereof.

In a third state, stage, or step, when the M2-CO₂ solution is passed through a mineralization reactor 930. The reactor 930 may include agitators or mixers to ensure thorough mixing of the contents of the reactor 930. The M2-CO₂ solution enters the mineralization reactor 930 through an inlet 952. The M2-CO2 solution may comprise molecules generically represented as RNH₃⁺ + RNHCOO⁻. RNHCOO⁻ may be described as a carbamate ion formed from the captured CO₂ binding to the molecule M2 and dissolving in the solution 940. A source of cations and alkalinity may also be provided to the reactor 930. The source of cations and the source of alkalinity may be the same source. A non-limiting example of the source may be CaO such that the cations are Ca²⁺. The CaO may increase the pH of the solution in the reactor 930 by releasing OH⁻ ions via chemical reaction 8.

(8) CaO(s) + H₂O ↔ Ca(OH)₂ ↔ Ca²⁺ + 2OH⁻

The released OH⁻ from reaction 8 may then react with the protonated amine, RNH₃⁺, from the aqueous M2-CO2 solution via reaction 9.

(9) RNH₃⁺ + OH⁻ → RNH₂ + H₂O

Accordingly, reaction 9 may regenerate RNH₂, thereby regenerating the solution 940. Reaction 9 may shift the pH of the solution within reactor 930, which may facilitate reaction 10.

(10) RNHCOO⁻ + H₂O → HCO₃⁻ + RNH₂ → RNH₂ + H⁺ + CO₃²⁻

The Ca²⁺ formed in reaction 8 may then react with the CO₃²⁻ formed in reaction 10 via reaction 11.

(11) Ca²⁺ + CO₃²⁻ → CaCO₃(s)

Thus, reaction 11 may generate the formation and precipitation of CaCO₃ in reactor 930 using the captured CO₂ from the M2-CO₂ solution. At least a portion of reactions 9 and 11 may be simultaneous such that the utilization through mineralization and regeneration may thus be performed simultaneously. In one embodiment, about 40 to 100 percent of the utilization and regeneration may be simultaneous. In another embodiment, about 60 to 100 percent of the utilization and regeneration may be simultaneous. In yet another embodiment, about 80 to 100 percent of the utilization and regeneration may be simultaneous.

The reactor 930 may include a precipitation tank 932. The precipitation tank 932 may be a separate compartment within the reactor 930. In the precipitation tank 932, the regenerated solution 940 and the solid CaCO₃ particles formed using the captured CO₂ may be under less agitation or mixing, allowing the solid CaCO₃ particles to settle at the bottom of the precipitation tank 932.

The reactor 930 may include a filter 934. The filter 934 may be included within the reactor 930. The filter 934 may be contained within the precipitation tank 932. The filter 934 may be structured, positioned, or otherwise configured such that when the contents of the reactor 930 and/or the precipitation tank 932 are removed from the reactor 930, the contents pass through the filter 934. Accordingly, the filter 934 may filter out the solid CaCO₃ particles from the regenerated solution 940. The regenerated solution 940 may be removed from the reactor 930 to the compartment 902 for utilization in the second state of the next cycle(s). The solid CaCO₃ particles may be allowed to collect in the reactor 930 and/or the precipitation tank 932 until a desired or predetermined level before being removed from the system 900.

A method of reducing CO₂ in air or atmosphere is disclosed herein. The method may include direct air capture (DAC). The method may include utilizing one or more systems disclosed herein. The method may include providing a compartment housing a solid CO₂ sorbent. The method may include passing air (initial or input air) through the compartment with the solid sorbent until a predetermined value of saturation is reached. The method may include releasing air with lower concentration of CO₂ than the initial CO₂ concentration in the input air from the compartment.

The method may further include providing an exchange liquid, fluid, or solution into the compartment to regenerate the sorbent once the sorbent is saturated to a desired or predetermined level. The sorbent regeneration may include detaching the CO₂ from the solid sorbent to a component M2 present in the exchange fluid. The method may thus include stripping the CO₂ sorped onto the solid sorbent from the sorbent and binding with M2 within the compartment. The method may include removing the exchange fluid with the M2-CO₂ from the compartment. The removal may be to an electrochemical cell to regenerate M2 and release CO₂. The removal may be to an electrochemical cell to regenerate M2 and reduce CO₂. The method may include regenerating M2 and/or reducing CO₂ by utilizing voltage and chemistry of the cell such as metal ions of the electrodes, which may exchange with and/or facilitate reduction of the CO₂ in the cathode compartment of the cell. The method may include releasing the detached CO₂ from the cell. The releasing may be realized via a separate tank. The method may include releasing products formed by reducing the CO₂ from the cell. The method may include providing the M2-metal ion composition to the anode compartment of the cell to detach M2 molecule from the M2-metal ion composition. The detaching may be provided via metal plating, utilizing the electrode. The removal may also be to a mineralization reactor to regenerate M2 and mineralize CO₂. The method may include regenerating M2 by introducing a source of alkalinity and mineralizing CO₂ into CaCO₃ by introducing a source of Ca²⁺. The method may include releasing the CaCO₃ from the reactor. The releasing may occur via a precipitation tank. The method may include reusing the pristine M2 in the next sorbent regeneration cycle in the compartment.

The method may include repeating the sorption and desorption cycle within the compartment by repeatedly flooding the compartment with the exchange fluid(s) and draining the exchange fluid(s) form the compartment. The repeating may be once, twice, three times, more times, predetermined amount of times.

The sorbent regeneration may include providing more than one exchange liquid or solution. The more than one liquids may be provided one at a time, one by one, one after the other. The method may include providing an exchange fluid having one or more molecules M1, which bind to the amine present in the solid sorbent and detach CO₂ from the solid sorbent. The method may include removing the displaced, detached, or stripped CO₂ from the compartment. The method may subsequently include providing a second exchange liquid into the compartment. The first and second exchange liquids may differ in composition, volume, and/or another property. The second exchange liquid may include molecule(s) M2 which bind stronger to the molecule(s) M1 than to the sorbent, strip M1 from the solid sorbent, and form complex(es) M1-M2.

The method may further include providing the M1-M2 complex(es) into an electrochemical cell for recovery of the M1, M2, or both. The recovery may be realized via electroplating or otherwise, utilizing chemistry of the cell, voltage, or both. The method may include cycling pristine M1, M2, or both to the compartment for the next sorbent regeneration cycle.

The method may include providing more than one compartment such as 2, 3, 4, 5, 6, 7, 8, 9, 10, or more compartments, each housing a solid sorbent. The method may include sorbing and desorbing CO₂ from the solid sorbent once or more times in each compartment before providing the M1-M2 complex(es) and/or M2-CO₂ to the electrochemical cell for the M1, M2 recovery.

The following application is related to present applications: U.S. Pat. Appln. Serial No. 18/162,326, filed January 31, 2023 (RBPA0421PUS) and U.S. Pat. Appln. Serial No. 18/347,614, filed July 6, 2023 (RBPA0421PUS1) and U.S. Pat. Appl. Serial Nos. 18/960,017 (RBPA0527PUS), U.S. Patent Appl. Serial No. 18/960,257 (RBPA0528PUS), U.S. Patent Appl. Serial No. 18/960,033 (RBPA0530PUS), U.S. Patent Appl. Serial No. 18/960,065 (RBPA0531PUS), U.S. Patent Appl. Serial No. 18/960,045 (RBPA0532PUS), and U.S. Patent Appl. Serial No. 18/960,078 (RBPA0534PUS), all filed on November 26, 2024, which are incorporated by reference in their entirety herein.
While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. A direct air capture method comprising:
receiving direct air captured CO₂ in an inlet to a chemical reactor, the captured atmospheric CO₂ being received from a solid sorbent;
precipitating a target product from the direct air captured CO₂ in the chemical reactor; and
outputting the target product from the chemical reactor.

2. The method of claim 1, wherein the target product is a carbonate mineral.

3. The method of claim 2, wherein the carbonate mineral includes at least one of Mg, Na, and Ca.

4. The method of claim 3, wherein precipitating a target product comprises a chemical precipitation reaction including reactants comprising CO₂, Ca²⁺, and H₂O.

5. The method of claim 1, wherein the receiving step incudes receiving the direct air captured CO₂ carried by an exchange fluid.

6. The method of claim 5, further comprising outputting the exchange fluid from the chemical reactor.

7. The method of claim 5, wherein the exchange fluid includes an amine dissolved in an aqueous solution.

8. The method of claim 6, further comprising separating the target product from the exchange fluid.

9. The method of claim 8, wherein the target product is separated from the exchange fluid via a precipitation tank.

10. The method of claim 8, further comprising recycling the exchange fluid to a compartment housing the solid sorbent.

11. A direct air capture method comprising:
sorbing atmospheric CO₂ onto a solid sorbent contained in a compartment to form bound CO₂;
regenerating the solid sorbent by flooding the compartment with an exchange fluid to detach the bound CO₂ from the solid sorbent and to form an exchange fluid-CO₂ solution;
utilizing the CO₂ from the exchange fluid-CO₂ solution in a chemical reactor by forming a product having the carbon atom from the CO₂ via a chemical precipitation reaction; and
regenerating the exchange fluid from the exchange fluid-CO₂ solution in the chemical reactor,
wherein at least a portion of the steps of utilizing the CO₂ and regenerating the exchange fluid are performed simultaneously.

12. The method of claim 11, further comprising receiving a mineralization reactant in an inlet to the chemical reactor, the mineralization reactant being a source of alkalinity and cations.

13. The method of claim 12, wherein the mineralization reactant is an industrial alkaline waste.

14. The method of claim 13, wherein the industrial alkaline waste includes at least one of fly ash, steel slag, blast furnace slag, and waste gypsum.

15. The method of claim 13, further comprising neutralizing the industrial alkaline waste in the chemical reactor via a chemical precipitation reaction including reactants comprising the CO₂ and the industrial alkaline waste.

16. The method of claim 15, wherein at least a portion of the steps of utilizing the CO₂ and neutralizing the industrial alkaline waste are performed simultaneously.

17. The method of claim 12, wherein the mineralization reactant is at least one of CaO, Ca(OH)₂, and CaCl₂.

18. A direct air capture system comprising:
a compartment housing a solid amine-functionalized CO₂ sorbent to sorb atmospheric CO₂;
an exchange fluid including a chemical component with a preferential affinity towards CO₂ to regenerate the solid amine-functionalized CO₂ sorbent and bind the atmospheric CO₂;
a chemical reactor fluidly connected to the compartment, the chemical reactor being operable to catalyze a chemical reaction wherein the atmospheric CO₂ is mineralized into a carbonate mineral;
a conduit fluidly connected to the chemical reactor and the compartment, the conduit structured to separate the chemical component from the carbonate mineral and to provide the chemical component from the chemical reactor to the compartment.

19. The system of claim 18, wherein the conduit is fluidly connected to a precipitation tank to separate the chemical component from the carbonate mineral.

20. The system of claim 18, wherein the conduit includes a filter to separate the chemical component from the carbonate mineral.
